# EUROPEAN PATENT APPLICATION

(11) **EP 2 821 865 A1**
(43) Date of publication of application: **07.01.2015**
(21) Application number: 13174554.9
(22) Date of filing: 01.07.2013
(51) Int. Cl.: G05B 19/042, B65B 59/00, G05B 19/418

(54) **Method and system for establishing a data set for identification of parts, modules and/or activities for conversion of flexible production system**

(71) Applicant: International Tobacco Machinery Poland Sp. z o.o., 26-600 Radom (PL)
(72) Inventor: Sikora, Leszek, 26-600 Radom (PL); Bujak, Dariusz, 26-600 Radom (PL)
(74) Representative: Markieta, Jaroslaw Franciszek

(57) **Abstract**

A method and a system for the preparation of a dataset identifying parts, subassemblies and/or operations for carrying out a conversion between a basic configuration and a desired configuration of a flexible production system with a computer module selecting the modules, assemblies/subassemblies or elements of the production system, used in the tobacco industry in particular for the production of filter rods, wherein: using a database comprising the production system status data containing production system identification data; production system location data; identification data of modules used in the production system; identification data of assemblies/subassemblies used in the modules; identification data of elements used in the subassemblies; data concerning the parameters of modules, assemblies/subassemblies, elements comprising parameter data, parameter names; data for carrying out a conversion comprising replacement procedure data; elementary operation data; chart data; warehouse location data; product specification data; whereas the base comprises relations among the data items; using a started computer program containing a selecting module the commands for conversion are received, a then using the data collected in the base a list of operations and a list of modules, assemblies/subassemblies and elements necessary to convert the production system according to the conversion command are generated.

## Description

The object of the invention is a method and system for establishing a data set for identification of parts, modules and/or activities for conversion of flexible production system, with a computer program selecting modules, assemblies/subassemblies or elements of a production system.

The invention is applicable in multi-module production systems with a high degree of complexity, particularly in the tobacco industry.

In the state of the art, systems for production control by changing the configuration of the production equipment are known. For example the US patent no. 6 944 824 discloses a method and a unit for changing the configuration of an automatic system wherein the user selects the desired final configuration by means of a selection module, and a display shows an ordered list of all operations required to carry out a conversion of the equipment from a present status to a desired configuration. The list of operations is ordered according to the sequence in which the individual operations are to be performed; furthermore, the status of one value in the initial configuration and the status of the same value in the final configuration are displayed for each operation.

From the US 6 980 959 publication, a method and a system for mechanical equipment configuration management are known which introduce management procedures for information concerning the parameters of mechanical equipment which facilitate the compliance with the safety requirements and the legal requirements as well as increase the reliability and the efficiency of mechanical equipment by reducing the downtime and the maintenance time. In this solution, the final, desired configuration of mechanical equipment is defined on the basis of a project goal, such as the goal related to the maintenance of safety, reliability, efficiency or a combination of the above. The current configuration of mechanical equipment is determined on the basis of the equipment description. Tasks related to the modification of a current configuration to a desired configuration are planned if the current configuration is not consistent with the final configuration.

From the US 7 895 047 publication, a computerised system for carrying out planned service operations for a production unit is known, with the said system containing a database of desired configurations, database of actual configurations and a data processing system. The data processing system checks whether the actual configuration corresponds to the desired configuration. The data processing system defines the requirements for system modification for the purpose of converting the current configuration into the desired configuration if they are noncompliant. The data processing system defines also interim configurations which eliminate delays in performing the procedure of production unit modification.

From the US 7 031 941 publication, a method and system for maintaining a database of configurations of mechanical equipment is known. A functional configuration database is established to store functional information about an end item and its subassemblies. A logical configuration database is also established that corresponds to the functional configuration database. A physical configuration database is also established to store physical information about an end item. An operational configuration database is established to store operational information about an end item. The database of configurations of mechanical equipment is maintained in accordance with the functional, logical, physical and operational configuration databases.

From the EP 2 103 522 document a brand control method for an automatic tobacco article processing machine is known. An automatic device manufactures end products from the materials delivered to it. The device itself comprises a number of electronically controlled operating parts which are together controlled by a control unit using control parameters. A method according to the EP 2 103 522 patent includes steps of defining the number of product brands which can be manufactured on the automatic machine, creating a specific number of configurations, each associated with a respective brand and having a set of values of control parameters transmitted to electronically controlled operating parts of the device, then selecting a desired product brand, loading the corresponding configuration onto the control unit to commence production of the desired brand. Furthermore, this method includes defining a number of sections of the device, each having a set of control parameters and being independent of the other sections, defining a number of recipes by assigning to each section at least one respective set of values of the corresponding control parameters so that each recipe corresponds to a respective section, and then defining each configuration by combining a number of compatible recipes so that each recipe may potentially form part of a number of different configurations.

The gist of the invention is a method of preparation of a dataset identifying parts, subassemblies and/or operations for carrying out a conversion between a basic configuration and a desired configuration of a flexible production system, whereas in the basic configuration a product with the basic specification is manufactured, and in the desired configuration a product with the desired specification is manufactured, with a computer module selecting the assemblies/subassemblies or elements of the production system, used in the tobacco industry in particular for the production of filter rods, wherein: using a database comprising the production system status data containing data selected from a group including: production system identification data; production system location data; data of modules used in the production system; data of assemblies/subassemblies used in the modules; data of elements used in the assemblies/subassemblies; data concerning the parameters of products, modules, assemblies/subassemblies comprising: parameter data, parameter names; data for carrying out a conversion containing data selected from a group comprising: replacement procedure data; elementary operation data; chart data; warehouse location data; product specification data; whereas the relations among the data collected in the base are defined, and using a started computer program containing a selecting module the commands for conversion between a basic configuration and a desired configuration are received, a then using the data collected in the base and the relations among the data items a list of operations and elements necessary to convert the production system according to the conversion command is generated.

Furthermore, a method according to the invention is **characterised in that** the list of operations comprises: disassembling the elements indicated by the program from an indicated place on the machine, putting the disassembled elements into an indicated warehouse location for elements, assembling indicated elements from an indicated warehouse location at an indicated place on the machine.

Furthermore, a method according to the invention is **characterised in that** a list of operations and/or elements together with additional information concerning the particular operations and/or the replacement of particular elements is generated.

Furthermore, a method according to the invention is **characterised in that** the elements are replaced in the form of a complete assembly/subassembly or module.

Furthermore, a method according to the invention is **characterised in that** a conversion command defining the available modules, assemblies/subassemblies and elements is received and product specifications that can be obtained for the available modules, assemblies/subassemblies and elements are generated.

Furthermore, a method according to the invention is **characterised in that** product specifications that can be obtained for the available modules, assemblies/subassemblies and elements together with a list of modules, assemblies/subassemblies and/or elements required to obtain a respective product specification are generated.

Furthermore, the gist of the invention is a system for the preparation of a dataset identifying parts, assemblies/subassemblies and/or operations for carrying out a conversion between a basic configuration and a desired configuration of a flexible production system with a computer module selecting the assemblies/subassemblies or elements of the production system, used in the tobacco industry in particular for the production of filter rods, comprising: a database containing the production system data including data selected from a group including: production system identification data; production system location data; data of modules used in the production system; data of assemblies/subassemblies used in the modules; data of elements used in the assemblies/subassemblies; data concerning the parameters of products, modules, assemblies/subassemblies comprising parameter data, parameter names; data for carrying out a conversion containing data selected from a group comprising: replacement procedure data; elementary operation data; chart data; warehouse location data; product specification data; whereas the relations among the data collected in the base are defined; and in addition using a computer program containing a selecting module which is adapted to receiving a conversion command, a then using the data collected in the database and the relations among the data items a list of operations and elements necessary to convert the production system according to the conversion command is generated.

Furthermore, a system according to the invention is **characterised in that** the computer program is adapted to receiving a conversion command defining a product specification and generating a list of operations and a list of modules, assemblies/subassemblies and/or elements necessary to convert the production system to a desired product specification.

Furthermore, a system according to the invention is **characterised in that** the computer program is adapted to receiving a conversion command defining the available modules, assemblies/subassemblies and elements and generating product specifications that can be obtained for the available modules, assemblies/subassemblies and elements.

Furthermore, a system according to the invention is **characterised in that** the computer program is adapted to generating product specifications that can be obtained for the available modules, assemblies/subassemblies and elements together with a list of modules, assemblies/subassemblies and/or elements required to obtain a respective product specification.

Furthermore, a system according to the invention is **characterised in that** the computer program is adapted to generating a list of modules, assemblies/subassemblies and elements together with the information about the location in the warehouse and the location on the machine.

Furthermore, a system according to the invention is **characterised in that** the computer program is adapted to generating a list of operations together with additional information about the replacement of individual modules, subassemblies and elements, in particular the multimedia information in the form of charts, computer animation presentations or instruction films.

The object of the invention has been shown in more detail in a preferred embodiment in a drawing in which:
Fig. 1 shows a front view of an example modular flexible production system;
Fig. 2 shows in the diagrammatic form the structure of a database of a system according to the invention;
Fig. 3 shows a dialog field for selecting the basic and desired specifications;
Fig. 4 shows an example list of assemblies/subassemblies, elements and operations of a conversion guide;
Fig. 5 shows an example list of modules of a conversion guide;
Fig. 6 shows the details of example operations in a conversion guide;
Fig. 7 shows a perspective drawing of an example assembly being converted;
Fig. 8 shows another perspective drawing of an example assembly being converted.

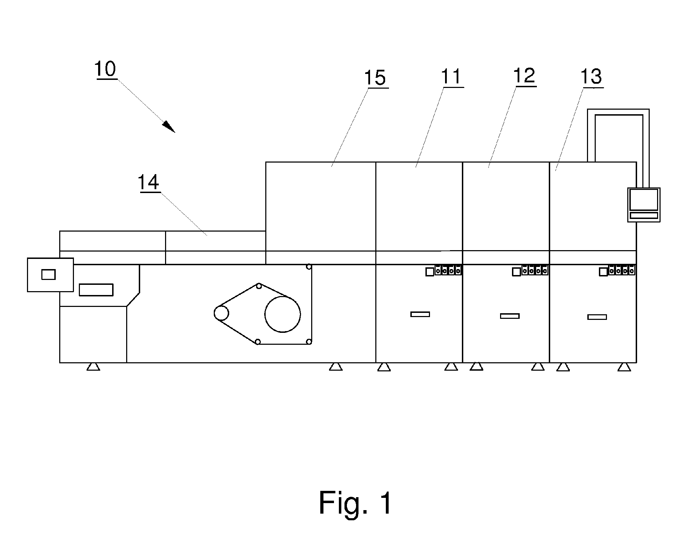

Fig. 1 shows an example of a flexible modular production system 10 used in the tobacco industry for the production of filters, in the form of a machine for manufacturing multi-segment filters. The product obtained with the production system shown may be diverse types of segment filters whereas such filters are manufactured in different configurations of the production system 10. The conversions between individual configurations of the flexible modular production system 10 may be prepared by means of the method and the system according to the invention. The flexible modular production system 10 is built of modules 11, 12, 13, 14, 15 whereas the modules 11, 12, 13 deliver segments making up the filter segments manufactured in the production system. Depending on the needs, individual modules may deliver segments made of one type of material or of different materials. The production system may comprise modules which do not deliver segments (for example modules 14, 15) and the function of which is to position the segments relative to one another, for example to determine the axial distances between the segments or to feed the segments to further modules of the production line. The modules 11, 12, 13, 14, 15 are replaceable modules or have replaceable elements, assemblies or subassemblies which can be quickly replaced by making a conversion between the configurations of the production system. The modularity also allows shortening the downtime of the production line in case of a failure or a maintenance work. Each of the modules has specific technical parameters describing its production capabilities. Such parameters are mainly related to the parameters of manufactured products, primarily with the dimensions of the segments used, i.e. the length and the diameter of the segments. Furthermore, they may depend on specific properties of the segments, for example on the rigidity of the filter material used or the segment surface structure. The technical parameters of an individual module may be changed by replacing its particular assemblies/subassemblies or format elements. For example, a change of the diameter of manufactured multi-segment filters entails the replacement of format elements depending on the diameter in all modules. Furthermore, almost any increase of the number of modules used in the production system is possible, which allows introducing products with a complex structure adjusted to the needs of the manufacturer of tobacco products. The increasing number of modules, and consequently the increasing number of obtainable configurations resulting from the possibility of a wide change of configuration of an individual module by replacing particular assemblies/subassemblies and elements, for example format elements, causes that a change of configuration becomes troublesome, and consequently the time for carrying out a modification (saved through the modularity) is extended. With a growing number of replaceable elements it becomes time-consuming to appropriately select individual assemblies/subassemblies so that they form a technically coherent correctly functioning configuration corresponding to the design assumptions concerning the product. Furthermore, in a growing number of possible configurations it is difficult to find potentially advantageous combinations of modules, assemblies/subassemblies and elements which allow obtaining a product with parameters which have not yet been taken into consideration or such a change of configuration which allows increasing the efficiency of the production system.

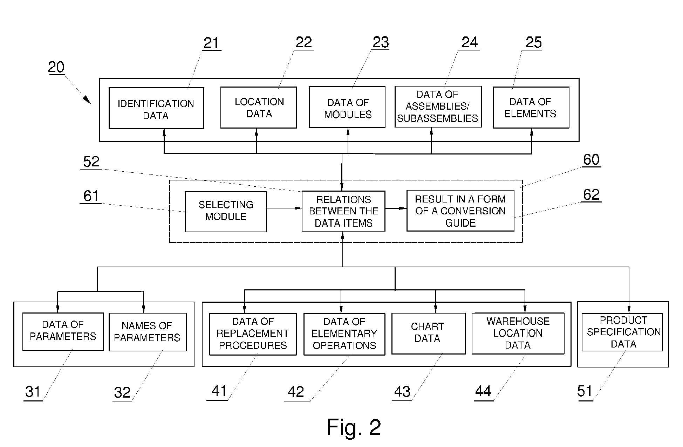

Fig. 2 shows a system according to the invention. Fig. 2 shows a system 20 for the preparation of a dataset necessary to carry out a conversion between the configurations of a flexible modular production system 10 of Fig. 1, with a computer module selecting the modules, assemblies/subassemblies or elements of a flexible modular production system 10, used in the tobacco industry. The system 20 comprises a database containing data concerning the status of the production system, such as the production system 10 identification data 21 (for example the machine production number); the production system 10 location data 22 (for example the machine location in the customer's factory); the data of modules 23 used in the production system 10 (for example types and factory numbers of the modules); the data of assemblies/subassemblies 24 used in the modules (for example types and factory numbers of the assemblies/subassemblies); the data of elements 25 used in assemblies/subassemblies (element numbers). Furthermore, the system comprises data including the parameters 31 of products, modules, assemblies/subassemblies and elements (for example variable dimensions or ranges of variable dimensions) and the parameter names 32. The system also comprises the data of replacement procedures 41 (for example the estimated time and cost of replacement), besides the procedures as well as the data describing them may concern manually performed operations or automatic control procedures; the data of elementary operations 42; the chart data 43; the warehouse location data 44. The database also comprises the product specification data 51 (dimensional relationships of a product and information about materials used). Furthermore, the base has assigned relations between the particular data items 52. The relations among the data items 52 connecting all data constitute a binding element for the collected information. Furthermore, the system of Fig. 2 comprises a computer program 60 comprising a selecting module 61 which is adapted to receiving a conversion command, and then using the data collected in the database and the relations among the data items 52 to generate a list of operations and a list of modules, assemblies/subassemblies and elements necessary to convert the production system according to the conversion guide 62.

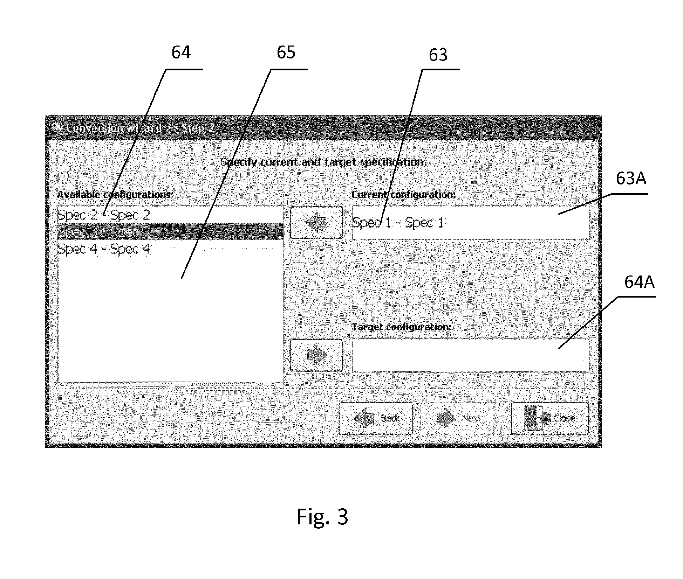

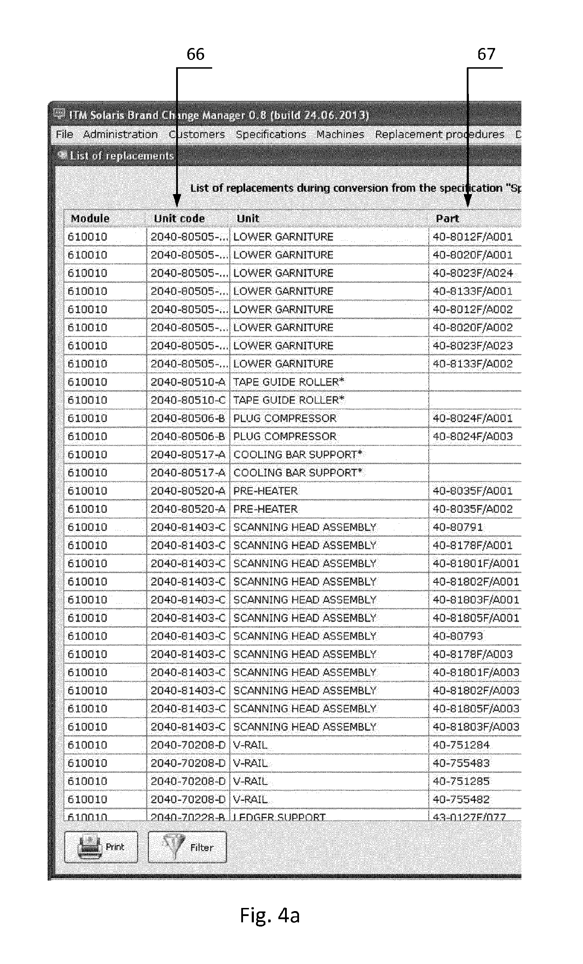

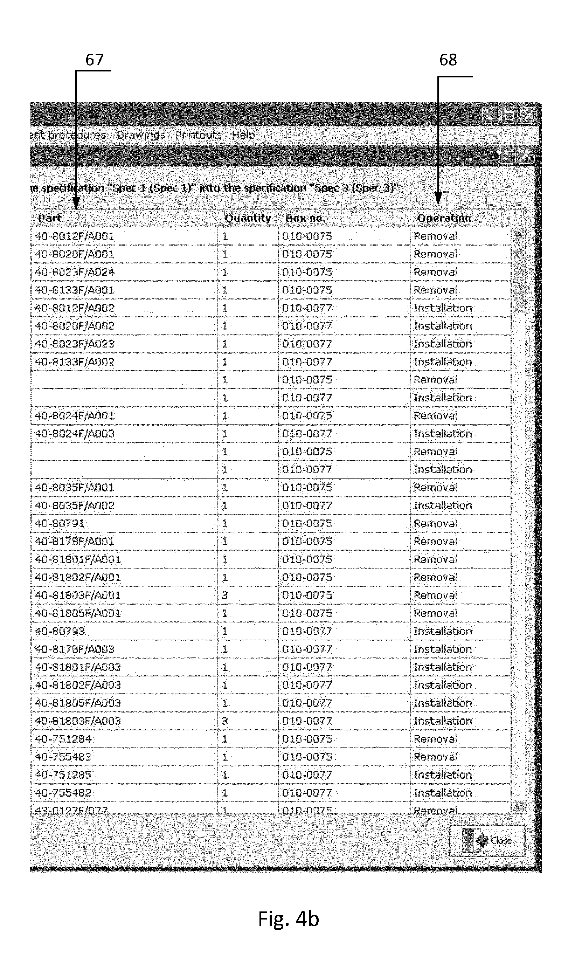

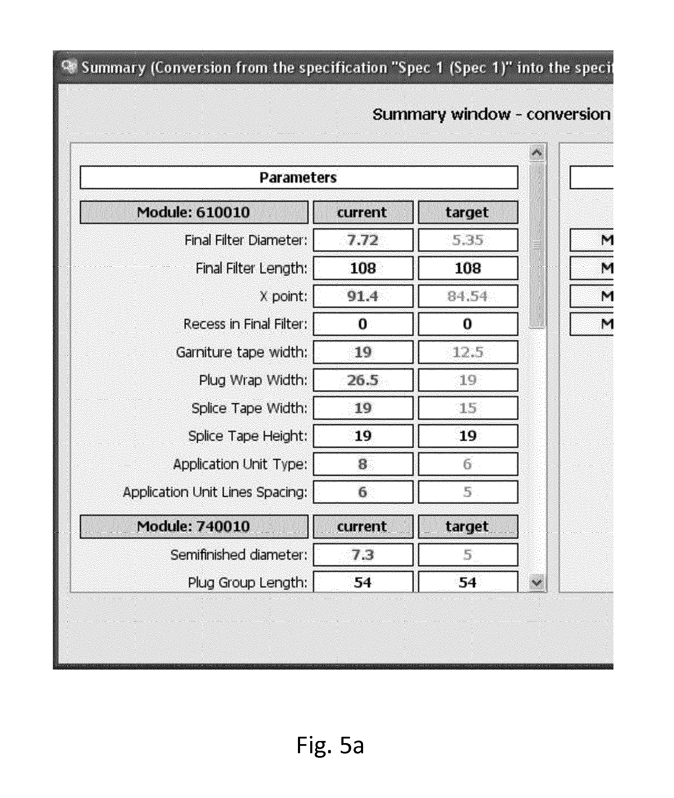

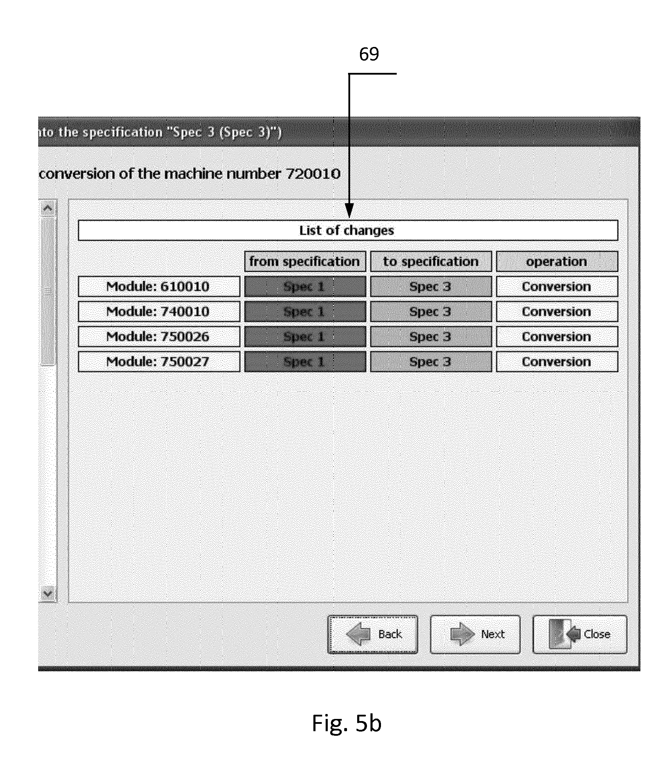

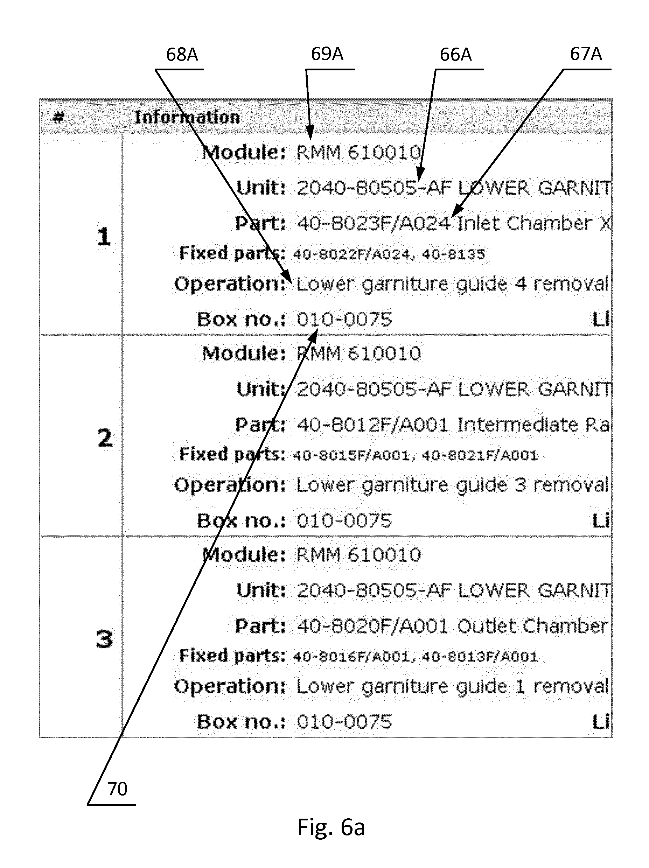

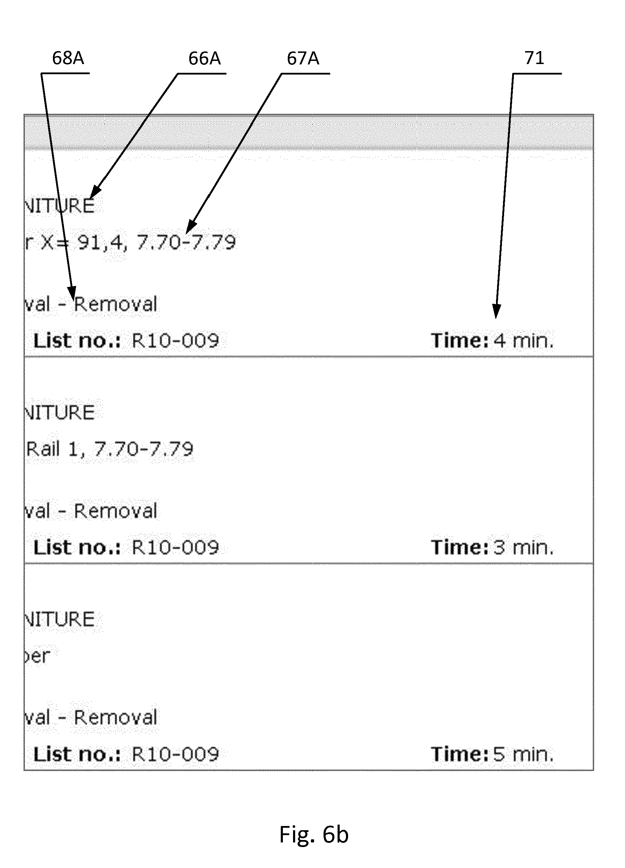

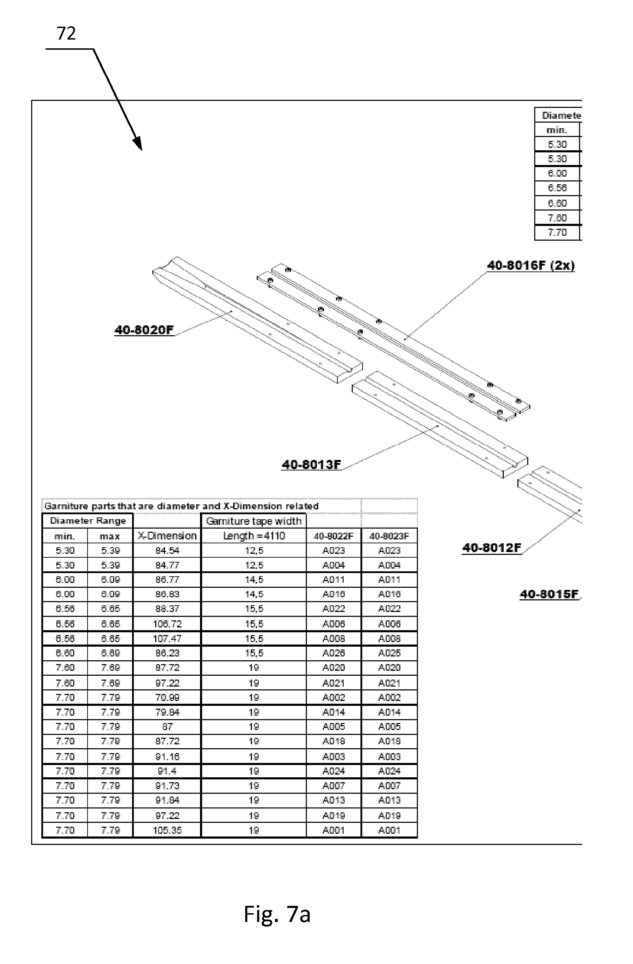

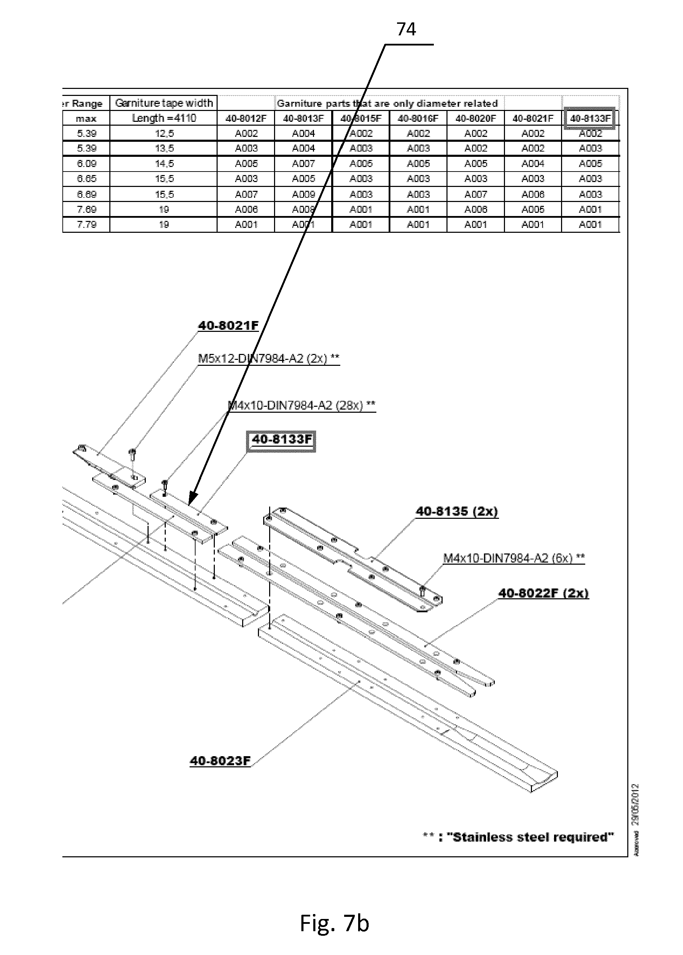

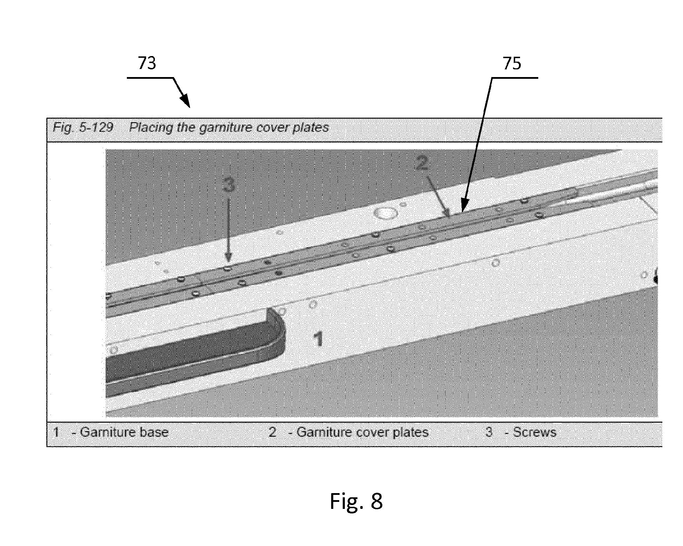

A system according to the invention shown in Fig. 2 receives by means of the module 61 the basic and desired product specifications and the conversion command. Fig. 3 shows a dialog field where the basic specification 63 is entered into the field 63A and the desired specification 64 is entered into the field 64B after being selected from the specifications in the field 65 containing available specifications, after which it is generated and conveyed in the form of the conversion guide 62. The conversion guide 62 makes available a list of assemblies/subassemblies 66 and/or elements 67, operations 68 (Fig. 4) and a list of modules (Fig. 5) necessary to convert the production system to the desired product specification. The conversion guide also makes available the details of particular operations 68 (Fig. 6), namely the operation name 68A, the module designation 69A, the assembly/subassembly designation 66A, the element designation 67A, the warehouse location designation 70 and the operation duration 71. If a desired conversion cannot be carried out, the system indicates which of the parameters of the product specification is outside of the limit values of products which may be made in the production system, for example by marking the indicated parameters with another colour. The conversion guide makes also drawings available, for example in the form of perspective views 72 (Fig. 7) and 73 (Fig. 8) of the assembly/subassembly being converted, in which the elements to be replaced 74, 75 are shown.

In another mode of operation, the system shown in Fig. 2 defines, on the basis of modules, assemblies/subassemblies and elements available at a respective location or at a respective customer, the obtainable end product specifications. In addition, the system operator may put a freely selected filter on the proposed specifications, imposing specific values of certain selected product parameters.

In a development of the function described above the system shown in Fig. 2 is capable of generating obtainable product specifications, based not only on the data comprising the modules, assemblies/subassemblies ad/or parts possessed by a respective customer, but generates a list of specifications of potentially manufacturable products together with a list of additional modules, assemblies/subassemblies and/or parts which should be added to the present machinery.

A system according to the invention shown in Fig. 2, when conveying the results in the form of the conversion guide 62, apart from a list concerning the required modules, assemblies/subassemblies and/or parts and the applied replacement procedures which are to be carried out, indicates the data locating the required assemblies/subassemblies in the warehouse system by specifying the number of the box containing a respective module, assembly/subassembly and/or element, but also the position of a respective element on the machine, in the form of a view presenting the position as well as the orientation of the element respective to other parts and assemblies/subassemblies of the machine. Such solution considerably shortens the time for carrying out a change of the production system configuration.

A system according to the invention shown in Fig. 2, apart from introducing the location data shortening the time for finding the required parts, supplements the list of operations required to change the system configuration with multi-media materials in the form of images showing the appearance of a respective module, assembly/subassembly and/or element in the system, animations and films showing the sequences of movements and tools required to carry out a respective operation, particularly in the form of charts, presentations, computer animation or instruction films.

## Claims

1. A method of preparation of a dataset identifying parts, subassemblies and/or operations for carrying out a conversion between a basic configuration and a desired configuration of a flexible production system, whereas in the basic configuration a product with the basic specification is manufactured, and in the desired configuration a product with the desired specification is manufactured, with a computer module selecting the assemblies/subassemblies or elements of the production system, used in the tobacco industry in particular for the production of filter rods wherein:
using a database containing
the status data of the production system comprising data selected from a group including:
production system identification data;
production system location data;
data of modules used in the production system;
data of assemblies/subassemblies used in the modules;
data of elements used in the assemblies/subassemblies;
data concerning the parameters of products, modules, assemblies/subassemblies containing:
parameter data,
parameter names;
data for carrying out a conversion comprising data selected from a group including:
replacement procedure data;
elementary operation data;
chart data;
warehouse location data;
product specification data;
whereas the relations among the data items collected in the base are defined,
and using a started computer program comprising a selecting module, commands for conversion between basic and desired configurations are received, and then
using the data collected in the base and the relations among the data items a list of operations and elements necessary to convert the production system according to the conversion command is generated.

2. A method according to claim 1 wherein the list of operations comprises:
disassembling the elements indicated by the program from an indicated place on the machine,
putting the disassembled elements into an indicated warehouse location for elements
assembling the indicated elements from an indicated warehouse location at an indicated place on the machine.

3. A method according to claim 1 or 2 wherein
a list of operations and/or elements together with additional information concerning the particular operations and/or the replacement of particular elements is generated.

4. A method according to any of the claims from 1 to 3 wherein the elements are replaced in the form of a complete assembly/subassembly or module.

5. A method according to claim 1 wherein
a conversion command defining the available modules, assemblies/subassemblies and elements is received and
product specifications that can be obtained for the available modules, assemblies/subassemblies and elements are generated.

6. A method according to claim 3 wherein
product specifications that can be obtained for the available modules, assemblies/subassemblies and elements together with a list of modules,
assemblies/subassemblies and/or elements required to obtain a respective product specification are generated.

7. A system for the preparation of a dataset identifying parts, assemblies/subassemblies and/or operations for carrying out a conversion between a basic configuration and a desired configuration of a flexible production system with a computer module selecting the assemblies/subassemblies or elements of the production system, used in the tobacco industry in particular for the production of filter rods, comprising:
a database containing the production system data including
data selected from a group including:
production system identification data;
production system location data;
data of modules used in the production system;
data of assemblies/subassemblies used in the modules;
data of elements used in the assemblies/subassemblies
data concerning the parameters of products, modules, assemblies/subassemblies comprising
parameter data,
parameter name
data for carrying out a conversion containing data selected from a group comprising:
replacement procedure data;
elementary operation data;
chart data;
warehouse location data;
product specification data;
whereas the relations among the data collected in the base are defined,
and in addition
a computer program containing a selecting module which is adapted to receiving a conversion command, and
adapted to generate a list of operations and elements necessary to convert the production system according to the conversion command , using the data collected in the database and the relations among the data items.

8. A system according to claim 7 **characterised in that** the computer program is adapted to receiving a conversion command defining a product specification and
generating a list of operations and a list of modules, assemblies/subassemblies and/or elements necessary to convert the production system to a desired product specification.

9. A system according to claim 7 **characterised in that** the computer program is adapted to
receiving a conversion command defining the available modules, assemblies/subassemblies and elements and
generating product specifications that can be obtained for the available modules, assemblies/subassemblies and elements.

10. A system according to claim 7 **characterised in that** the computer program is adapted to
generating product specifications that can be obtained for the available modules, assemblies/subassemblies and elements together with a list of modules, assemblies/subassemblies and/or elements required to obtain a respective product specification.

11. A system according to any of the claims from 7 to 10 **characterised in that** the computer program is adapted to
generating a list of modules, assemblies/subassemblies and elements together with the information about the location in the warehouse and the location on the machine.

12. A system according to any of the claims from 7 to 10 **characterised in that** the computer program is adapted to
generating a list of operations together with additional information about the replacement of individual modules, subassemblies and elements, in particular multimedia information in the form of charts, computer animation presentations or instruction films.
